# EUROPEAN PATENT APPLICATION

(11) **EP 4 840 683 A1**
(43) Date of publication of application: **18.11.2026**
(21) Application number: 26177410.3
(22) Date of filing: 08.05.2026
(51) Int. Cl.: B60L 53/67, B60L 53/62, B60L 53/63, B60L 53/66, B60L 53/68

(54) **ELECTRIC VEHICLE CHARGING SYSTEM AND METHOD FOR MANAGING THE CHARGING POWER OF CHARGING POSTS**

(30) Priority: 13.05.2025 IT 202500010756
(71) Applicant: Wroom S.r.l. Societa'Benefit, 24126 Bergamo (IT)
(72) Inventor: MONTI, Lorenzo, I-24126 BERGAMO (IT)
(74) Representative: De Lorenzo, Danilo

(57) **Abstract**

A system and method for the dynamic balancing of charging power in electric vehicle charging stations, using the Open Charge Point Protocol (OCPP), comprises charging pillars (21, 22, 23, 24), a back-end management server (2) configured to receive real-time available power data from the power grid (3) and on the power requested by the electric vehicles (51, 52, 53, 54), and a remote communication module (28) for sending power regulation commands. The electronic processing unit (27) calculates an optimal power distribution to avoid overloads and improve energy efficiency. The associated method enables centralized management of the pillars without the need for hardware or software modifications, ensuring interoperability and scalability.

## Description

The present invention falls within the field of electric vehicle charging at a shared charging station.

More precisely, the present invention relates to an electric vehicle charging system and a method for managing the charging power of a charging pillar.

The electric vehicle (EV) charging sector is undergoing rapid expansion, with a significant increase in demand for charging infrastructure. However, the existing charging stations exhibit different limitations that hinder efficient and optimized use of the available energy resources.

In particular, many charging pillars are equipped with charging pillars made by different manufacturers, with heterogeneous communication protocols and hardware features. This diversity renders the integration and centralized management of the charging posts complex, often requiring specific hardware or software modifications for each model. Further, the absence of a dynamic power balancing system may lead to overloads of the electrical grid or to inefficient utilization of the available power, resulting in energy waste and high operating costs.

Further, even in the presence of charging pillars of the same manufacturer or the same type, there is no efficient management of power balancing between charging pillars. Further, in this case, it is necessary that the charging pillars of the same manufacturer be connected to each other by appropriate wiring or local communication protocols between charging pillars to allow the exchange of information (For example in Mod-BUS). This therefore requires the employment of specific resources or the use of wiring between charging pillars, which in some cases may be inefficient and costly.

For the aforesaid reasons, it is an object of the present invention to provide a system and method for the dynamic balancing of the charging power in charging stations for electric vehicles, that are as versatile and efficient as possible.

It is a further object of the present invention to provide a system and method for the dynamic balancing of charging power in charging pillars for electric vehicles, which are capable of managing electric charging pillars made by different manufacturers and of different models.

According to the invention, the aforesaid objects are achieved by an electric vehicle charging system and by a method for managing the charging power of a charging pillar, according to the appended independent claims. Preferred embodiments of the invention are defined in the dependent claims.

The features and advantages of the present invention will become apparent from the following description, given by way of non-limiting example, according to the accompanying figures, in which:
FIG. 1 is a schematic diagram showing the architecture of an electric vehicle charging system, according to an embodiment of the present invention;
FIG. 2 is a schematic diagram showing the electric vehicle charging system in Figure 1 in a different charging scenario;
FIG. 3 is a schematic diagram showing the electric vehicle charging system in Figure 1 in a further different charging scenario.

According to the accompanying Figures, 1 overall designates an electric vehicle charging system 1 for the dynamic balancing of the charging power in an electric vehicle charging station.

It is specified that the examples and embodiments described in the present document are provided by way of non-limiting example. Some technical details, known to those skilled in the art, may be omitted for simplicity and clarity of exposition. Further, any modifications, adaptations, or reorganizations of components or operational steps, provided that they fall within the scope of the appended claims, must be considered an integral part of the invention.

The electric vehicle charging system 1 comprises charging pillars 21, 22, 23, 24 for electric vehicles. Each charging pillar 21, 22, 23, 24 is at least equipped with a control unit 200 configured to receive power regulation commands for power supplied to an electric vehicle 51, 52, 53, 54 being charged using the Open Charge Point Protocol (OCPP) communication protocol, known in the electric vehicle charging sector.

According to an embodiment, the charging pillars 21, 22, 23, 24 have one or more different electrical or electronic charging management components (for example, also different charging connectors, type 2, CCS Chademo) or have different protocols for managing charging or power supply commands to their own charging connector 500. This may be, for example, because the charging pillars 21, 22, 23, 24 were made by different manufacturers or because they are different models.

The electric vehicle charging system 1 comprises a back-end management server 2, configured to receive available power datum of the power grid 3. Such available power value is, for example, a preset value stored on a storage device of the electric vehicle charging system 1. For example, the available power value is the maximum power suppliable by the entire charging station.

According to an embodiment, the back-end management server 2 is configured to receive in real time an available power value from the power grid 3, for example from an electric power distribution apparatus of the power grid (for example from an active power meter).

Preferably, the back-end management server 2 is arranged in a remote position with respect to the charging pillars 21, 22, 23, 24. For example the back-end management server 2 is external to the charging pillars. In another example the back-end management server 2 is preferably positioned in a position very far from the charging pillars 21, 22, 23, 24, for example a cloud server.

According to the invention, the back-end management server 2 is configured to receive required charging power data from each electric vehicle 51, 52, 53, 54 connected to the charging pillars. The reception of such available power datum and charging power request data occurs, for example, by means of a remote communication module 28, appropriately configured for receiving such data.

The back-end management server 2 comprises an electronic processing unit 27. Such electronic processing unit 27 is configured to calculate the optimal distribution of charging power to be assigned to each charging pillar 21, 22, 23, 24, based on the processing of the available power data from the power grid and the required charging power data. This makes it possible to avoid the overload of the power grid.

As mentioned, the electric vehicle charging system 1 also comprises a remote communication module 28. Preferably, such a module is integrated in the back-end management server 2. The remote communication module 28 is configured to send control messages based on the Open Charge Point Protocol (OCPP) communication protocol to each charging pillar 21, 22, 23, 24. This enables the real-time regulation of the charging power suppliable by each charging pillar. The adjustment occurs based on the optimal distribution of charging power calculated by the electronic processing unit of the back-end management server 2.

The OCPP protocol (acronym for Open Charge Point Protocol) is a communication standard known and used in the sector of electric vehicle charging stations.

Preferably, the calculation of the optimal distribution of charging power and the sending of control messages based on the OCPP communication protocol to the individual charging pillars are performed entirely and exclusively by the remotely located back-end server (preferably a Cloud server).

Therefore, according to an embodiment, only the electronic processing unit 27 is configured to calculate the optimal distribution of charging power to be assigned to each charging pillar 21, 22, 23, 24, based on processing of the available power data from the electrical grid and the required charging power data. Further, in this variant, only the remote communication module 28 integrated into the back-end management server 2 is configured to send control messages based on Open Charge Point Protocol (OCPP) communication protocol to each charging pillar 21, 22, 23, 24.

According to an embodiment, each charging pillar 21, 22, 23, 24 has different electrical or electronic charge management components.

According to an embodiment each charging pillar 21, 22, 23, 24 has different management protocols for charging or power delivery internal to the pillar.

Each charging pillar is provided with a control unit 200 configured to receive supplied power regulation commands. The communication occurs by means of the Open Charge Point Protocol (OCPP).

Preferably, the remote communication module 28 is configured to send one or more control messages based on the Open Charge Point Protocol (OCPP) communication protocol directly to the control unit 200 of each charging pillar 21, 22, 23, 24, optionally through a specific charging-pillar remote communication module, which communicates with the control unit 200.

Preferably, the electric vehicle charging system 1 is therefore configured to activate said charging pillars without requiring hardware or software modifications to the individual charging pillars. According to an embodiment, the electronic processing unit 27 is configured to adapt in real time the distribution of charging power as a function of the number of vehicles currently charging.

According to an embodiment, the remote communication module 28 is integrated into the back-end management server 2 and supports secure and encrypted transmission of control messages based on the Open Charge Point Protocol.

According to an embodiment, each charging pillar 21, 22, 23, 24 is free of a direct communication with another charging pillar regarding data on power being supplied and/or data on power supplied by another charging pillar.

According to an embodiment, each charging pillar 21, 22, 23, 24 is configured to communicate exclusively with the back-end management server 2, and not to communicate directly with another charging pillar, nor directly with a remote electronic device 4 configured to send a charge activation command.

This enables the independence of the charging pillars and means that no direct communication is required between the pillars themselves, because each charging pillar receives a power command from the back-end management server 2, which sets the power to be supplied based on the availability of energy of the electricity grid and on the number of vehicles being charged.

As stated, a method for managing the charging power of a charging pillar in an electric vehicle charging system is also covered by the present invention. Preferably, but not necessarily, the method is executed by an electric vehicle charging system 1 as detailed in any one of the embodiments of the present description.

The method comprises the following operational steps:
a) receiving, in a back-end management server 2, a datum relating to available power from the power grid 3 and data relating to the charging power required by each electric vehicle 51, 52, 53, 54 connected to a charging pillar 21, 22, 23, 24, each charging pillar being equipped with a control unit 200 for managing charging;
b) calculating, by means of an electronic processing unit 27 of the back-end management server 2, an optimal distribution of charging power to be assigned to each charging pillar 21, 22, 23, 24 based on the available power datum and the data relating to the charging power required by each electric vehicle 51, 52, 53, 54 being charged, so as to avoid overloading the power grid 3;
c) sending in real time, by means of a remote communication module 28 and using control messages based on the Open Charge Point Protocol (OCPP), commands to regulate in real time the power suppliable by the charging pillar 21, 22, 23, 24 (or by each charging pillar) according to the calculated optimal distribution of charging power.

The method preferably provides that the control unit 200 of each charging pillar enables delivery of the suppliable charging power, received from the back-end management server 2, to a charging connector (500) of the charging pillar 21, 22, 23, 24.

According to an embodiment, the method includes an initial step wherein the back-end management server 2 receives a datum relating to the available power from the electric grid 3. This datum may be provided as a preset value or, for example, by an active power meter connected to the electric grid. Simultaneously, the back-end server receives data relating to the charging power requested by each electric vehicle 51, 52, 53, 54 connected to the charging pillars 21, 22, 23, 24. Each charging pillar is provided with a control unit 200 configured to manage charging and to receive power regulation commands.

According to an embodiment, the method further includes the operational step of:
d) monitoring, in real time, the charging status of each electric vehicle 51, 52, 53, 54 and, by means of the electronic processing unit 27, updating the optimal distribution of charging power according to the variations of the available power and the number of vehicles being charged.

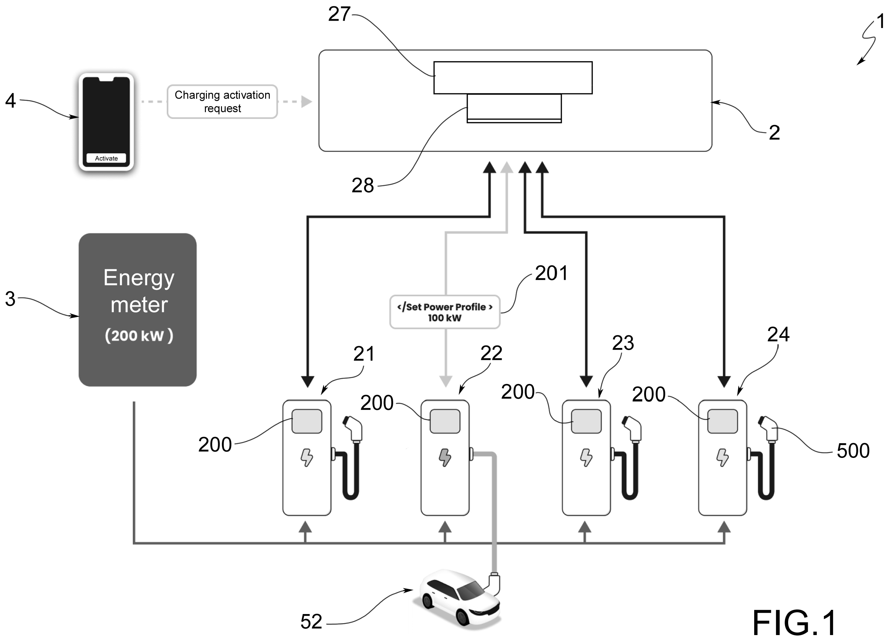

Figures 1 to 4 show some operational examples of the electric vehicle charging system.

In particular, FIG. 1 shows an electric vehicle charging system 1 in a scenario in which only one electric vehicle 52 is being charged at one of the four available charging pillars 21, 22, 23, and 24, while the request for activation of charging has been sent by means of a remote mobile device 4. The remote mobile device 4, such as a smartphone, is used for sending the request for activation of charging to the back-end management server 2, for example to the remote communication module 28. This remote mobile device 4 enables users to interact with the electric vehicle charging system 1 in a simple and intuitive manner, initiating the charging process of the electric vehicle 52 and using the charging connector 500.

The power grid 3 supplies the available power to the electric vehicle charging system 1, monitored by an energy meter. In this case, the available power is indicated as 200 kW. The back-end management server 2 receives in real time the data relating to the available power from the electric grid 3 and the data relating to the charging power requested by the electric vehicle 52, through the remote communication module 28.

The charging pillars 21, 22, 23 and 24 are provided with charging connectors 500 and each pillar is capable of supplying at most a rated power of 100kW. Each charging pillar is configured to receive power regulation commands sent by the remote communication module 28 of the back-end management server 2. The power regulation commands are received in a remote manner by the charging pillar by means of the control unit 200 of each charging pillar. In this scenario, only the charging pillar 21 is active and is supplying power to the electric vehicle 52. The power regulation command, sent by the back-end management server 2, is represented by the message "Set Power Profile" which therefore assigns 100 kW to the charging pillar 21.

The electric vehicle charging system 1 is designed to optimize the use of the available power, avoiding overloads of the electric grid 3, and ensuring efficient distribution of the power among the charging pillars 21, 22, 23 and 24. In this case, as only one electric vehicle 52 is charging, the system assigns all the rated power suppliable by the charging pillar 21, keeping the other charging pillars inactive.

As can be understood from the description of the electric vehicle charging system 1 described thus far, according to an embodiment of the invention, the electric vehicle charging system 1 comprises a control architecture centralized in the cloud, free of local coordination units or intermediate "Master/HUB" devices installed at the charging station. Preferably, each charging pillar 21, 22, 23, 24 establishes an individual and direct communication session with the remote back-end management server 2. This structural configuration allows obtaining the technical effect of eliminating the "Single Point of Failure" represented by local controllers typical of the prior art (such as load management HUBs); thereby, a possible hardware failure of a charging pillar or a local network node does not impair the capability of the back-end server 2 to dynamically regulate the remaining charging pillars. Further, such architecture permits heterogeneous management of charging pillars of different manufacturers on the same site, since the balancing logic resides entirely in the back-end server 2 and is abstracted from the local hardware.

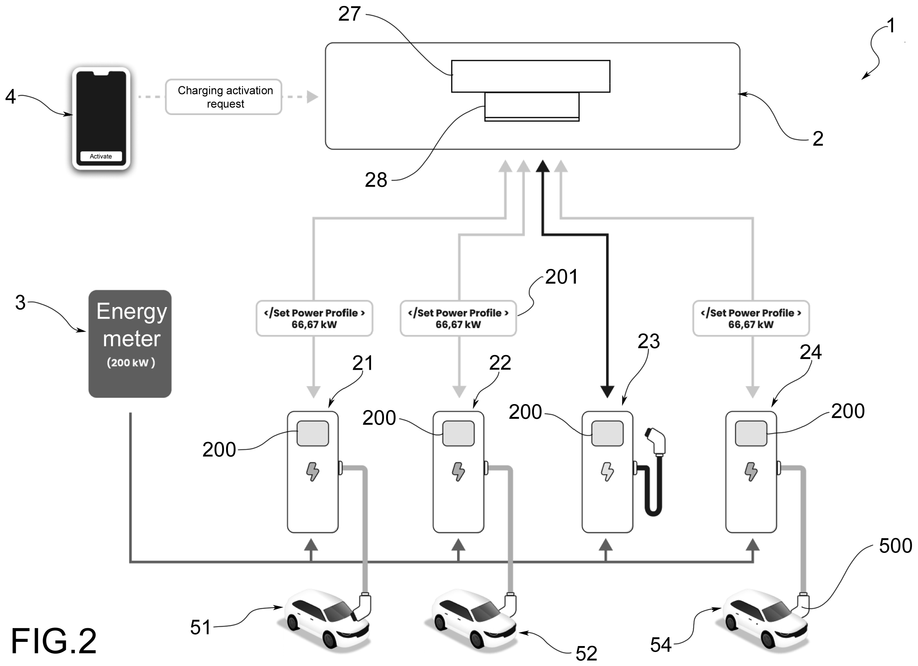

FIG. 2 shows an electric vehicle charging system 1 in a scenario wherein three electric vehicles 51, 52, and 54 are being charged simultaneously at three of the four available charging pillars 21, 22, 23, and 24.

Also in this case, the power available from the electrical grid is indicated as 200 kW. The charging pillars 21, 22 and 23 are active and are supplying power to the electric vehicles 51, 52 and 54. The power adjustment command, sent by the back-end management server 2, is represented by the "Set Power Profile" messages, which assign, respectively, 66.67 kW to each of the active charging pillars. The charging pillar 24 remains inactive since it is not connected to any vehicle. In this case, since three electric vehicles are charging simultaneously, the system distributes the available power of 200 kW uniformly. Therefore, the electronic processing unit 27 calculates the optimal power distribution equal to 66.67 kW and then assigns 66.67 kW to each active pillar, keeping the electric grid stable and the charging operations efficient.

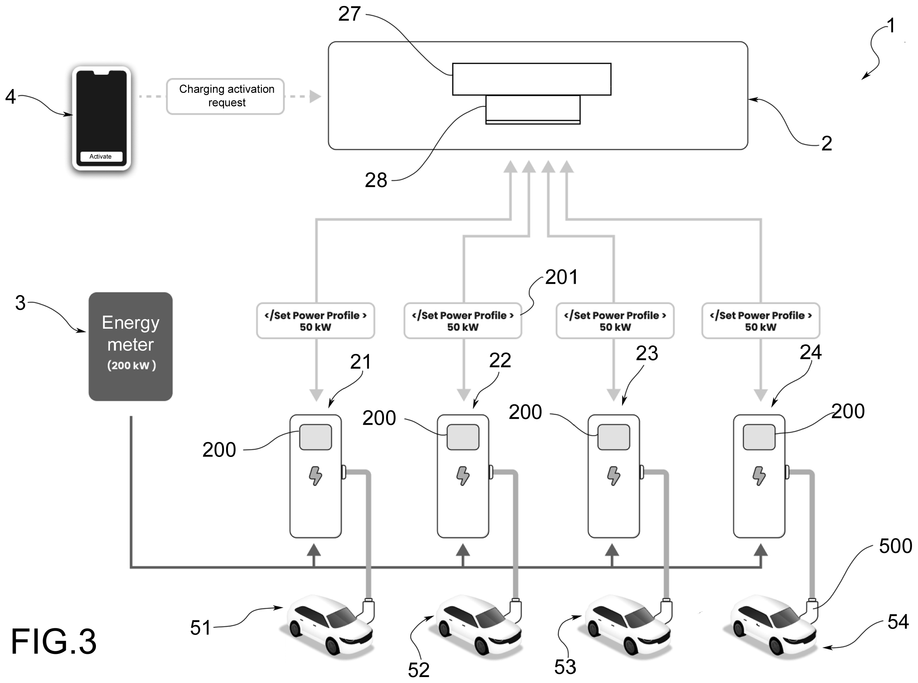

FIG. 3 shows an electric vehicle charging system 1 in the scenario in which all the charging pillars 21, 22, 23, 24 are occupied by electric vehicles 51, 52, 53 and 54 charging simultaneously.

In this scenario, all the charging pillars 21, 22, 23 and 24 are active and are supplying power to the electric vehicles 51, 52, 53 and 54. The power adjustment command, sent by the back-end management server 2, is represented by the "Set Power Profile" messages which assign, respectively, 50 kW to each of the active charging pillars, i.e. one fourth of the available power (200kW) from the electricity distribution grid.

Innovatively, by virtue of the system and method of the present invention, it is possible to improve and simplify the communication and management of charging between charging pillars, also with different types of pillars having different architectures or produced by different operators.

The configuration of the charging system having a central back-end management server, allows dynamic balancing of the charging power across the entire charging station, improving energy efficiency and preventing overloads of the power grid. In particular, the specific architecture allows the integration of charging pillars with heterogeneous electrical components or management protocols into a single station and, through the use of the Open Charge Point Protocol (OCPP), eliminates the need for specific hardware or software modifications for each charging pillar, simplifying implementation and reducing operating costs.

Further, even in the presence of charging pillars having the same architecture, the management of the dynamic power balancing entrusted to a back-end management server positioned remotely and outside the individual charging pillars (therefore not locally) makes it possible to obtain greater system flexibility and allows savings in resources and in communication difficulties between the individual charging pillars, also avoiding wiring between the charging pillars.

The back-end management server, equipped with an electronic processing unit, calculates in real time the optimal distribution of the charging power based on the available power data from the grid and on the power requested by the vehicles being charged. This approach ensures that the total power supplied does not exceed the capacity of the grid, avoiding service interruptions and improving the stability of the system.

The remote communication module, configured to send OCPP-based control messages, enables real-time adjustment of the power suppliable by each charging pillar. This allows the distribution of power to be dynamically adapted based on the operating conditions, such as the number of vehicles being charged and their specific requirements, improving the overall efficiency of the system and without the need to make hardware or software modifications to the charging pillar, which may therefore be integrated out-of-the-box.

The described architecture therefore enables centralized management of the charging pillars, independently of the manufacturer or model, promoting the interoperability and scalability of the system. For example, in a scenario in which multiple vehicles are connected simultaneously, the system may distribute the available power between the active pillars, ensuring optimal use of energy resources and uniform charging for all vehicles.

Further, the system configuration in which each charging pillar is configured to communicate exclusively with the back-end management server, and not directly with other charging pillars or remote devices, allows simplifying the architecture of the charging system. This approach eliminates the need for a peer-to-peer communication network between the charging pillars, reducing the complexity of the system and minimizing potential synchronization problems or communication conflicts between the charging pillars themselves.

Further, this configuration ensures that all decisions related to power distribution are centralized in the back-end management server. This allows more precise and reliable control of the supplied power, since the server may process, in real time, the data relating to the available power and to the charging demand, without depending on direct communications between the charging pillars. This improves the operational stability of the system and reduces the risk of errors due to inconsistent or incomplete communications.

The absence of direct communication between the charging pillars also increases the security of the system, as it reduces potential attack opportunities for possible intrusions or unauthorized tampering. Each charging pillar receives commands exclusively from the back-end server, which may implement advanced security protocols, such as encryption, to protect communications.

Finally, this configuration facilitates the integration of charging pillars of different manufacturers or with heterogeneous internal protocols, since each charging pillar interacts exclusively with the back-end server by means of a standardized protocol such as OCPP. This approach improves the interoperability of the system and reduces implementation costs, eliminating the need for specific adaptations to allow direct communication between charging pillars.

Further, with respect to the management method, when the electronic processing unit 27 of the back-end server 2 performs the calculation of the optimal distribution of power by processing, in an aggregated manner, the data originating from the electrical grid 3 and the charging requests, the execution of such calculation in a remote position (preferably on a Cloud server) with respect to the charging station consists in a significant reduction of the computational overhead required of the control units 200 of the individual charging pillars. The latter need not process load balancing algorithms nor communicate between them, but act as passive actuators of "Set Power Profile" commands received by means of the OCPP protocol. This allows the use of less complex and more robust control units 200, reducing the maintenance costs and the energy consumption of the station itself, by moving the computational burden onto a scalable infrastructure.

Further, in an embodiment, the electric-vehicle charging system 1 is configured so that the charging pillars 21, 22, 23, 24 are devoid of local cross-talk or mesh communication capability; each data exchange occurs exclusively in a vertical direction between the individual charging pillar and the back-end management server 2. This logical and physical isolation between the charging pillars grouped in a charging site produces the technical effect of increasing the cybersecurity of the station, preventing the propagation of any cyber attacks or firmware malfunctions from one pillar to another through the local network. The granular control exerted by the remote communication module 28 by means of the OCPP protocol ensures that the power is allocated in real time, with a deterministic latency managed by the server back-end 2, optimizing the stability of the local power network 3 without the need for dedicated field buses between the pillars.

Further, the integration between the real-time monitoring of the available power from the electric grid 3 and the centralized calculation in the back-end server 2 permits superior responsiveness of the system to decentralized solutions. Since the server back-end 2 has a holistic view not only of the single charging pillar but, potentially, of a plurality of interconnected charging pillars, the dynamic balancing of the power suppliable by each charging pillar 21, 22, 23, 24 is updated instantaneously upon each variation of the network load. The technical effect is proactive protection against load shedding (local blackout) and maximization of the charging speed for the end user, achieved through the sequential and coordinated transmission of OCPP control messages that modulate the charging profiles without the oscillations typical of local control systems with limited feedback.

It is apparent that a person skilled in the art may make changes to the invention described above, all of which are contained within the scope of protection as defined in the following claims in order to satisfy contingent needs.

## Claims

1. Electric vehicle charging system (1), for the dynamic balancing of charging power in an electric vehicle charging station, comprising:
- charging pillars (21, 22, 23, 24), wherein each charging pillar (21, 22, 23, 24) is at least equipped with a control unit (200) configured to receive power regulation commands for power supplied to an electric vehicle (51, 52, 53, 54) being charged using the Open Charge Point Protocol (OCPP) communication protocol;
- a back-end management server (2), arranged in a remote position with respect to the charging pillar (21, 22, 23, 24), and configured to receive real-time available power datum from the power grid (3) and charging power data requested by each electric vehicle (51, 52, 53, 54) when connected to the charging pillars(21, 22, 23, 24); wherein the back-end management server (2) comprises an electronic processing unit (27) configured to calculate the optimal distribution of charging power to be assigned to each charging pillar (21, 22, 23, 24) based on a processing of the available power datum from the power grid and the required charging power data;
and wherein said electric vehicle charging system (1) comprises a remote communication module (28), configured to send control messages based on the Open Charge Point Protocol (OCPP) to each charging pillar (21, 22, 23, 24), to regulate in real time the power suppliable by each charging pillar based on the optimal distribution of charging power calculated by the electronic processing unit (27) of the back-end management server (2).

2. Electric vehicle charging system (1) according to claim 1, configured to activate said charging pillars without requiring hardware or software modifications to the individual charging pillars.

3. Electric vehicle charging system (1) according to claim 1 or 2, wherein the electronic processing unit (27) is configured to adapt the distribution of charging power in real time according to the number of vehicles currently charging.

4. Electric vehicle charging system (1) according to any one of the preceding claims, wherein the remote communication module (28) is integrated into the back-end management server (2) and supports the secure and encrypted transmission of control messages based on the Open Charge Point Protocol (OCPP).

5. Electric vehicle charging system (1) according to any one of the preceding claims, wherein each charging pillar is devoid of direct communication with another charging pillar relating to a power datum it is supplying.

6. Electric vehicle charging system (1) according to any one of the preceding claims, wherein each charging pillar (21, 22, 23, 24) is configured to communicate exclusively with the back-end management server (2) and not to communicate directly with another charging pillar or directly with a remote electronic device (4) configured to send a charging activation command (for example a smartphone).

7. Electric vehicle charging system (1) according to any one of the preceding claims, wherein the charging pillars (21, 22, 23, 24) have one or more different electrical or electronic charging management components or have protocols for managing charging or power supply commands to their own different charging connector (500).

8. Method for managing the charging power of a charging pillar (21, 22, 23, 24) in an electric vehicle charging system (1), comprising the following operational steps:
a) receiving, in a back-end management server (2), a datum relating to available power from the power grid (3) and data relating to a charging power required by each electric vehicle (51, 52, 53, 54) connected to a charging pillar (21, 22, 23, 24), each charging pillar being equipped with a control unit (200) for managing charging;
b) calculating, by means of an electronic processing unit (27) of the back-end management server (2), an optimal distribution of charging power to be assigned to each charging pillar (21, 22, 23, 24) based on the available power datum and the data relating to the charging power required by each electric vehicle (51, 52, 53, 54) being charged, so as to avoid overloading the electrical network (3);
c) sending, in real time, to the charging pillar (21, 22, 23, 24), through a remote communication module (28) and using control messages based on the Open Charge Point Protocol (OCPP), commands to adjust in real time the suppliable charging power by the charging pillar (21, 22, 23, 24) in accordance with the calculated optimal distribution of charging power.

9. Method according to claim 8, further comprising the step of:
d) monitoring, in real time, the charging status of the electric vehicles (51, 52, 53, 54) and, by means of the electronic processing unit (27), updating the optimal distribution of charging power according to the variations of the available power and the number of vehicles being charged.

10. Method according to claim 8 or 9, further comprising the step of:
a0) using a remote electronic device (4), for example a smartphone, remotely sending a charging activation request for a preselected charging pillar to the back-end management server (2).
